# EUROPÄISCHE PATENTANMELDUNG

(11) **EP 4 480 926 A1**
(43) Veröffentlichungstag der Anmeldung: **25.12.2024**
(21) Anmeldenummer: 23180535.9
(22) Anmeldetag: 21.06.2023
(51) Int. Cl.: C02F 1/48, C02F 1/00, C02F 9/00, G21B 3/00

(54) **VORRICHTUNG ZUR BEHANDLUNG VON MEDIEN**

(71) Anmelder: PBTechnology, s.r.o, 831 03 Bratislava (SK)
(72) Erfinder: PETROVSKY, Jan, 094 31 Hanusovce nad Topl'ou (SK)
(74) Vertreter: Jeck, Jonathan

(57) **Zusammenfassung**

Es handelt sich um eine Vorrichtung Behandlung von Medien mit Strom (AC-DC). Dabei ist mindestens eine Frequenz, vorzugsweise gepulste Frequenz, vorgesehen, indem das transportierte Medium mit Gleich- und/oder Wechselstroms beaufschlagt wird, bis es zu der Trennung vorhandener Molekularverbindungen und Substanz-Strukturen kommt, wobei durch Druckveränderungen endemischen Materialien gebildet werden.

## Beschreibung

### Bereich der Technologie

Die Erfindung bezieht sich auf eine Vorrichtung und ein Verfahren zur Behandlung von Medien nach dem Oberbegriff des Anspruchs 1.

### Aktueller Stand der Technik

Bekannt sind Vorrichtungen, wie sie in der US 2014/ 0326 711 A1 offenbart sind.

Der Brennstoff besteht aus Nickelpulver, Lithium und Aluminium. Die Vorrichtung besteht aus einem zylindrischen Rohr mit Rippen auf der Oberseite, das aus Aluminium (Oxid) besteht und an seinen Enden durch zylindrische Blöcke - Kappen - verschlossen ist. Der Brennstoff befindet sich im Inneren des Aluminiumoxids, das eine innere Durchgangsbohrung aufweist. Auf der Außenseite des zylindrischen Körpers ist eine Widerstandsspule gewickelt, die der Erwärmung und der elektromagnetischen Stimulation des Raums dient. Der Nachteil dieses Verfahrens ist eine hohe Kosteneffizienz, die mit einem einzigen Medium in einem festen technologischen Modus mit begrenzter Variationskontrolle der physikalischen Parameter des Prozesses arbeitet. Die wichtigsten Elemente der kalten Fusion werden dematerialisiert, was die Effizienz verringert und auch die Umwelt verschmutzt.

Ausgehend vom obigen Stand der Technik, liegt der Erfindung die Aufgabe zugrunde, hier Abhilfe zu schaffen.

Die gestellte Aufgabe wird durch die Merkmale des Anspruchs 1 gelöst.

Die durch die Erfindung erzielten Vorteile bestehen darin, dass die physikalischen Parameter bei Flüssigkeiten, Gase, Aerosole und Feststoffe veränderbar und einstellbar sind und gleichzeitig den trüben Elektrolyten klären kann. Der Stromgenerator im Rohrleitungssystem bringt das Medium mit mindestens einer Frequenz in Schwingung, vorzugsweise gepulst, mit der Möglichkeit, die Frequenzquelle zu schalten. Der Stromgenerator hat eine Steuerungseinheit, die mit dem Monitor verbunden ist. Das Medium hat ein Arbeitsreservoir, das mit einem Reservoir für neues Nachfüllmedium gekoppelt ist. Der Arbeitsspeicher hat einen Produktionsgaseinlass mit Füllstandsmesser, dem eine medienphysikalische Behandlungseinrichtung und ein Kühler nachgeschaltet sind. Der Arbeitsspeicher ist mit einem Gasabscheider-Sättiger verbunden, dem ein Entfeuchter und ein Absorber nachgeschaltet sind.

Ein Ausführungsbeispiel der Erfindung ist in der Zeichnung schematisch dargestellt

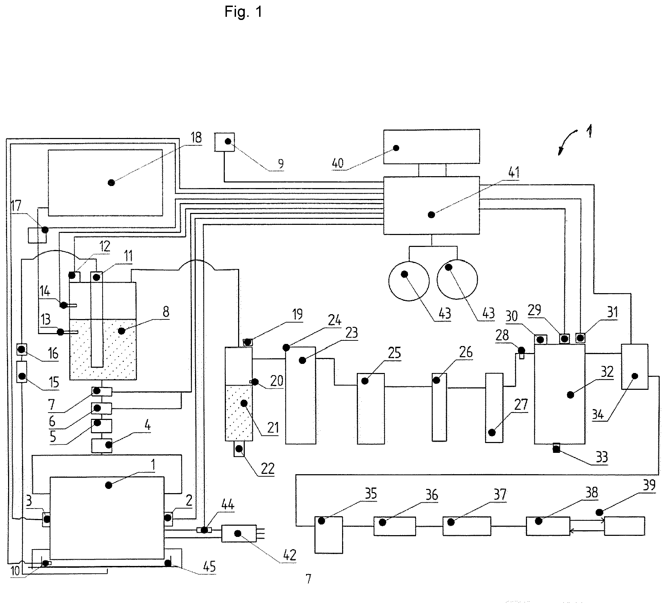

In der beiliegenden Figur 1 ist eine allgemeine Ausführungsform der Erfindung dargestellt mit der Möglichkeit ihrer Variation auf verschiedene Medien (Flüssigkeiten, Gase, aber auch Feststoffe).

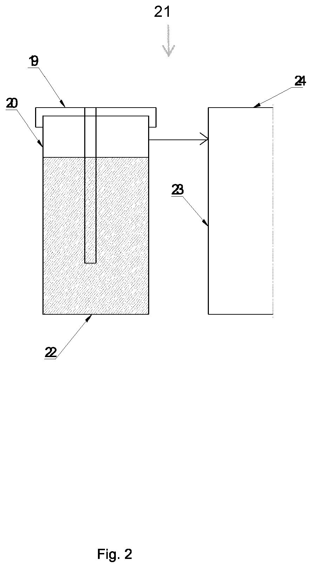

Figur 2 zeigt einen Gasabscheider-Sättiger.

Beispiele für Ausführungsformen der Erfindung

Die Vorrichtung 1 besteht aus einem ersten Thermometer 2 und einem zweiten Thermometer 3, die miteinander verbunden sind, einem Gas- und Medienkühler 16, vor dem sich ein Gas- und Medienkonditionierer 15 befindet, mit einem Druckmesser 12 und einem Regenerator 13, über dem sich ein Medienfüllstandsmesser 14 befindet. Am Boden des Behälters 8 sind eine Medienkonditionierungsvorrichtung 5 und eine Regenerierpumpe 7 angeschlossen, die mit einem Durchfluss- und Medienqualitätsmesser 6 verbunden ist, der an ein Rückschlagventil 4 angeschlossen ist. Der Medienbehälter 8 ist mit einem Abscheider 21 verbunden, der ein Ventil 22 und mindestens einen Füllstandsmesser 20 und einen Druckmesser 19 aufweist. Der Abscheider 21 ist mit einem Entfeuchter 23 verbunden, an dem ein Feuchtigkeitsmesser 24 vorgesehen ist. Ferner ist ein Feuchtigkeitsabsorber 25 vorgesehen, der an eine Feuchtigkeitsaufbereitungsvorrichtung 26 angeschlossen ist, die mit einer Unterdruckvorrichtung 27 zur Veränderung des Mediendrucks verbunden ist. An die Steuereinheit 41 sind je nach Kühlbedarf des Mediums mindestens ein Ventilator 43 und ein Sensor 9 für den Gehalt des gasförmigen Teils des Mediums sowie ein Sensor 10 für den Gehalt des flüssigen Teils des Mediums angeschlossen. An die Mediumsdrucksänderungseinrichtung 27 ist ein Vorratsdruckbehälter 32 mit einem Ablassventil 33 angeschlossen, der ein Manometer 29, ein Überdruckventil 30 und einen Wärme-Feuchtigkeitsmesser 31 für den gasförmigen Anteil des Mediums aufweist. Der Vorratsbehälter 32 ist mit einem Durchflussmesser 34 verbunden, der mit einem Druckregelventil 35 verbunden ist. Das Druckregelventil 35 ist mit einem ersten Überdruckventil 36 verbunden ist, gefolgt von einem zweiten Überdruckventil 37, dem eine Brennerbrennkammer 38 folgt. Vorzugsweise verfügt der Brenner 38 über einen separaten Energiezähler 39 und ist mit der Steuereinheit 41 und dem Monitor 40 verbunden. Vorzugsweise ist die Quelle 42 mit einem Energiezähler 44 für die zugeführte Energie ausgestattet und mit der Steuereinheit 41 verbunden. Die Frequenz- und Impulskommunikationssignale ermöglichen in Abhängigkeit von der Zusammensetzung des Mediums, insbesondere seiner physikalischen Größen, die gewünschten Leistungsabgaben. Der Energieerzeuger 1 ist in einem Sicherheitsbehälter 45 untergebracht, der mit einem Sensor 10 für den Medienaustritt verbunden ist.

Die erfindungsgemäße Vorrichtung kann als Energieumwandler in Kombination mit herkömmlichen Heizkesseln eingesetzt werden, bei denen chemisch behandeltes Wasser als Medium verwendet wird. Die Lösung eignet sich auch als eigenständige Energieumwandler mit eigenem thermohydraulischem Kreislauf und/oder erwärmt indirekt über einen Wärmetauscher den Heizungswasserkreislauf. Da auf diese Weise die Eigenschaften der Werkstoffe verändert und Kristallisationen erzeugt werden.

Mit der Vorrichtung können die Eigenschaften wie Leitfähigkeit, Oberflächenspannung, Viskosität, spezifische Wärme und Verdampfungswärme bis zur gegenseitigen oder teilweisen Verschmelzung einer Verbindung oder eines Gemisches verändert werden. Die Beaufschlagung des Mediums erfolgt in Impulsen mit mindestens zwei Frequenzen in Abhängigkeit von der Chemie des Mediums (Elektrolyt), seinen physikalischen Größen und den gewünschten Eigenschaftsänderungen und/oder der daraus resultierenden Produktions- und Temperaturleistung. Der Behälter 8 für das Arbeitsmedium ist durch ein Rohr verbunden mit dem Vorratsbehälter 18 des neuen Nachfüllmediums des Stromerzeugers 1 des Kreislaufs, wobei zwischen dem Behälter 8 für das Arbeitsmedium und dem Vorratsbehälter 18 des neuen Mediums eine Nachfüllpumpe 17 angeordnet ist, die mit der Steuereinheit 41 elektrisch verbunden ist und diese mit dem Monitor 40 verbunden ist.

Zur Aufbereitung von modifiziertem Wasser wurden zwei Geräte mit einer Leistungsaufnahme von 2 x 2 Watt eingesetzt. Das heißt, der Gesamtstromverbrauch für die Aufbereitung von modifiziertem Wasser betrug 4 Watt. Bei einem Verbrauch von 4 Watt erzeugen wir ein Sinussignal mit einer Frequenz von 300 MHz, das sich günstig auf das behandelte Medium auswirkt und den gewünschten Effekt erzielt, der gemessen und in der beigefügten Tabelle festgehalten wird. Neue wesentliche Merkmale der Elektrolyse sind beispielsweise die gegenseitige Beeinflussung des Rohrleitungssystems bei Druckänderungen bis zum Vakuum, die Entfeuchtung von Gas, die Beseitigung der Entmaterialisierung von Elektrolyseurplatten und die Reinigung von mit supramolekularer Flüssigkeit, vorzugsweise mit Mineralien, behandeltem Gas.

Es wurde ein TREASURE-Gerät in Kombination mit einem Laser und Gleichstrom zur Aufbereitung von Trink- und Brauchwasser eingesetzt.

Das TREASURE-Gerät hatte in Kombination mit einem 5-mW-Laser und einem 0,5-Watt-Gleichstrom einen Gesamtverbrauch von 1,4 Watt. Ein Sinussignalgenerator mit einer Frequenz von 300 MHz in Kombination mit einem Laser und einem Gleichstrom mit einem Gesamtverbrauch von 1,91 Watt hat die gemessenen und in den beigefügten Tabellen erfassten Trink- und Brauchwässer eingestellt. Die neuen wesentlichen Merkmale der Behandlung von Flüssigkeiten mit Änderung ihrer Eigenschaften sind insbesondere die Einwirkung von Photonen durch verschiedene Lasertypen oder durch Gleichstrom und/oder Wechselstrom mit sinusförmigem Verlauf ohne Phasenverschiebung die AZ-Kammer mit Potentialen, die durch Mineralien, vorzugsweise Oxide, Hydroxide, Silikate und Meteoriten, erzeugt werden.

### Elektrolyse

| Zeit | Temperatur | V | A | W | L/min | L/hod. | L/hod/1W | L/hod/Kw | 1KG/KW | % |
|---|---|---|---|---|---|---|---|---|---|---|
| 00:15 | 25 | 15 | 41,29 | 619,4 | 1,5 | 90 | 0,145 | 145,3 | 76,99 | 42,9 |
| 00:30 | 37,5 | 15 | 51,33 | 770 | 2 | 120 | 0,156 | 155,8 | 71,78 | 46,0 |
| 00:45 | 38,5 | 11,28 | 82,97 | 936 | 2,5 | 150 | 0,160 | 160,3 | 69,81 | 47,3 |
| 01:00 | 41 | 11,28 | 82,97 | 936 | 2,5 | 150 | 0,160 | 160,3 | 69,81 | 47,3 |
| | | | | | | | | | | |
| 00:15 | 25 | 15 | 16 | 240 | 0,90 | 54 | 0,225 | 225,0 | 49,72 | 66,4 |
| 00:30 | 38,5 | 15 | 16 | 240 | 0,92 | 55,2 | 0,230 | 230,0 | 48,64 | 67,8 |
| 00:45 | 43,6 | 11,28 | 23,04 | 259,891 | 1 | 60 | 0,231 | 230,9 | 48,46 | 68,1 |
| 01:00 | 53,8 | 11,28 | 22,24 | 250,8672 | 0,97 | 58,2 | 0,232 | 232,0 | 48,22 | 68,4 |

Messdaten-Vergleich: Wasserleitungswasser versus behandeltes Wasser nach der Erfindung

| Test durchführt in Waschmaschine PRIMUS | | | | |
|---|---|---|---|---|
| Messung von Wasserleitungswasser | | Messung von behandeltem Wasser | | |
| Zeit/min | Temperatur/C | Zeit/min | Temperatur/C | % |
| 7,33 | 19 | 5,53 | 19 | 32,50% |
| 7,6 | 19,5 | 5,83 | 19,5 | 30,30% |
| 8,03 | 20 | 6,2 | 20 | 29,50% |
| 8,36 | 20,5 | 6,6 | 20,5 | 26,60% |
| 8,76 | 21 | 6,9 | 21 | 27,00% |

### BEZUGSZIFFERNLISTE

1 Stromerzeuger
2 Thermometer 2 Generator 1
3 Thermometer 3 Generator 1
4 Rückschlagventil
5 Ausrüstung zur Medienbehandlung
6 Durchflussmesser und Medienqualitätsmesser
7 Nachfüllpumpe für Kühlmittel
8 mittlerer Behälter 1
9 Gaslecksensor
10 Medienlecksensor
11 Versorgung mit produziertem Gas
12 Manometer 1
13 Aufstockung der neuen Medien
14 Pegelmesser 1
15 Gasaufbereitung und Medien
16 Gaskühler und Medien
17 neue Mediennachfüllpumpe
18 Behälter für neues Medium
19 Manometer 2
20 Pegelmesser 2
21 Abscheider - Sättiger
22 elektronisches Ablassventil
23 Gas-Luftentfeuchter
24 Luftfeuchtigkeitsmesser
25 Terminal-Feuchtigkeitsabsorber
26 Gasaufbereitungsanlagen
27 Vakuumeinrichtung
28 Rückschlagventil
29 Manometer 3
30 Sicherheitsventil
31 Gasfeuchte- und Temperaturmessung
32 Druckbehälter
33 Auslassventil
34 Gasdurchflussmesser
35 Steuerdruckventil
36 Sicherheitsventil Nummer 1
37 Sicherheitsventil Nummer 2
38 Gasverbrennung
39 Temperatur messendes Thermometer
40 PLC-Monitor
41 Steuerung, Messung, Auswertung, Absicherung, Pwm-Steuerung
42 Energieversorgung
43 Ventilatoren
44 Messung der Stromaufnahme
45 Sicherheitsfach

## Patentansprüche

1. Vorrichung und Verfahren zur Behandlung von Medien mit Strom (AC-DC), **gekennzeichnet durch** mindestens eine Frequenz , vorzugsweise gepulste Frequenz, indem das transportierte Medium mit Gleich- und/oder Wechselstroms beaufschlangt wird, bis es zur die Trennung vorhandener Molekularverbindungen und Substanz-Strukturen kommt, wobei durch Druckveränderungen endemischen Materialien gebildet werden.

2. Vorrichtung nach Anspruch 1 mit einem ersten Thermometer (2) und einem zweiten Thermometer (3), die mit einer Steuereinheit (41) sowie einem Monitor (40) verbunden ist, **gekennzeichnet durch** einen Arbeitsmittelbehälter (8) , der mittels einer Pumpe (17) hydraulisch mit einem Nachspeisebehälter (18) verbunden ist , dass diese mit einer Steuereinheit (41) elektrisch verbunden ist,
dass in den Arbeitsmittelbehälter (8) ein Gasauslass (11) mündet, dass ein Druckmesser (12) und eine Füllstandsmesser (13) des minimalen Füllstands des Mediums sowie ein Füllstandsmesser (14) des maximalen Füllstands des Mediums vorgesehen ist, dass an den Behälter (8) eine Mediumbehandlungseinrichtung (5) angeschlossen ist, dass der Behälter (8) mit einem Abscheider (21) verbunden ist, der ein Ablassventil (22), mindestens einen Füllstandsmesser (20) und einen Druckmesser (19) aufweist,
dass der Abscheider (21) mit einem Entfeuchter (23) sowie mit einem Feuchtigkeitsabsorber (25) verbunden ist, der mit einem Feuchtigkeitsaufbereiter (26) und mit einer Unterdruckeinrichtung (27) zur Veränderung des Medium-Drucks Mediums verbunden ist, dass mindestens ein Gebläse (43) mit einer Steuereinheit (41) verbunden ist, dass ein Sensor (9) für den Gehalt des gasförmigen Teils des Mediums und ein Medienlecksensor (10) für den Gehalt des flüssigen Teils des Mediums vorgesehen sind, dass ein Druckbehälter - Vorratsbehälter (32) mit einem Ablassventil (33) mit einem Manometer (29), einem Sicherheitsventil (30) und einem Wärme-Feuchtigkeitsmessgerät (31) für den gasförmigen Teil des Mediums an die VakuumDruckänderungseinrichtung (27) angeschlossen ist.

3. Vorrichtung nach Anspruch1 oder 2, **dadurch gekennzeichnet, dass** der Druckbehälter (32) oben auf dem gasförmigen Teil des Mediums einen Wärme- und Feuchtigkeitsmesser (31) aufweist, der mit einer Steuereinheit (41) und einem Monitor (40) verbunden ist, dass dabei der Behälter (32) mit einem Durchflussmesser (34) verbunden ist, der wiederum mit einem Druckregelventil (35) verbunden ist,
dass das Druckregelventil (35) mit einem ersten Sicherheitsventil (36) und einem zweiten Sicherheitsventil (37) verbunden ist, dem ein Brenner (38) nachgeschaltet ist, und dass der Brenner (38) einen separaten Energiezähler (39) aufweist und mit einem Steuergerät (41) mit einem Monitor (40) verbunden ist.

4. Vorrichtung nach einem der Ansprüche 1 bis 3 **dadurch gekennzeichnet, dass** der Brenner (38) einen separaten Energie-(Wärme-)Zähler (39) aufweist und mit einer Steuereinheit (41) mit dem Monitor (40) verbunden ist.

5. Vorrichtung nach einem der Ansprüche 1 bis 4,**dadurch gekennzeichnet, dass** zwischen der Vakuumdruckänderungseinrichtung (27) und dem Druckbehälter-Reservoir (32) ein Rückschlagventil (28) vorgesehen ist.
